Europäisches Patentamt

European Patent Office

Office européen des brevets

(11) Publication number : **0 506 407 A1**

# EUROPEAN PATENT APPLICATION

(21) Application number : **92302639.7**

(22) Date of filing : **26.03.92**

(51) Int. Cl.⁵ : **C02F 1/46**

(30) Priority : **27.03.91 GB 9106512**

(43) Date of publication of application :
**30.09.92 Bulletin 92/40**

(84) Designated Contracting States :
**AT BE CH DE DK ES FR GB GR IT LI LU MC NL PT SE**

(71) Applicant : **Woodhouse, Derek Alfred**
**48 Moathouse Drive**
**Haughton Stafford (GB)**

(72) Inventor : **Woodhouse, Derek Alfred**
**48 Moathouse Drive**
**Haughton Stafford (GB)**

(74) Representative : **MacMaster, Alan Jeffrey et al**
**Swindell & Pearson 48 Friar Gate**
**Derby DE1 1GY (GB)**

(54) **Control of scale formation.**

(57) A method of treating hard water to counter the deposition of scale comprises introducing into the water a component consisting of a selected metal and a more noble metal in contact with one another whereby to induce the release from the selected metal of ions and salt particles operative to induce coagulation and crystallization of scale forming impurities in suspension in the water. The selected metal is preferably zinc and the more noble metal copper or high purity iron. The invention also provides a device for treating hard water comprising a unitary member consisting of a component of a selected metal and a component of a more noble metal in contact with one another.

Fig. 7

Fig. 8

EP 0 506 407 A1

This invention relates to methods and means for countering the deposition of hard water scale in containers or on the inner surfaces of conduits or apparatus in which the water is contained or through which it flows.

To prevent or reduce the deposition of scale it has previously been proposed to constrain scale forming particles to remain in suspension in the water thus preventing them from attaching themselves to the inner surfaces of pipes and the like and forming scale deposits. It has previously been proposed to achieve this result by placing in contact with the water a material which will release ions and minute particles of oxides or hydroxides which remain in suspension in the water and form sites for crystallization or coagulation of scale-forming impurities in the water. Hitherto this has been attained by electrolytic action utilizing the sacrificial material as an anode in combination with a cathode connected in electrical circuit with the anode, the anode and cathode being arranged such that the water passes between them and acts as an electrolyte. It is an object of the present invention to provide an alternative means of controlling scale formation which is of simpler and less expensive construction.

The invention provides a method of treating hard water to counter the deposition of scale by releasing into the water ions and salts of a selected metal, the method comprising introducing into the water a component comprising the selected metal and a more noble metal in contact with one another, whereby to induce the release from the selected metal of ions and salt particles operative to induce coagulation and crystallization of scale forming impurities in suspension in the water.

Preferably the selected metal is zinc, whereby in use zinc oxide and zinc hydroxide particles are released into the water to form sites for said crystallization.

The invention also provides a device for treating hard water to counter the deposition of scale comprising a unitary member comprising a component of a selected metal and a component of a more noble metal in contact with one another, whereby water flowing through the device produces oxidation of the selected metal and releases ions and salt particles into the water to form sites for the formation of crystals of scale forming impurities in suspension in the water.

The device may comprise a casing of non-metallic material within which is supported a bar of said more noble metal to opposite sides of which are secured bodies of said selected metal. Alternatively a body of said selected metal may be held in place in said casing by radially extending support members formed from said more noble metal.

Preferably said casing comprises a length of pipe of circular cross-section incorporating slotted end members in which said component is located and provided with central passages through which water may enter and leave the device.

Preferably said selected metal is zinc. Said more noble metal may be copper or iron, preferably unalloyed high purity iron.

Embodiments of the invention will now be described, by way of example only, with reference to the accompanying diagrammatic drawings, in which:

Fig. 1 is a side elevation of a device according to the invention;

Fig. 2 is a side elevation of a unitary metallic component adapted for use in a device according to one embodiment of the invention;

Fig. 3 is a cross-section through a device incorporating the component of Fig. 2;

Fig. 4 is a fragmentary section on the line IV-IV in Fig. 3 showing one end of the device;

Fig. 5 is an exploded perspective view to a reduced scale of a unitary metallic component according to an alternative embodiment of the invention;

Fig. 6 is a side elevation of the component of Fig. 5 in its assembled condition;

Figs. 7 and 8 are views similar to Figs. 3 and 4 of the alternative embodiment incorporating the component of Figs. 5 and 6; and

Fig. 9 is a cross-section through a further embodiment incorporating an alternative form of unitary metallic component.

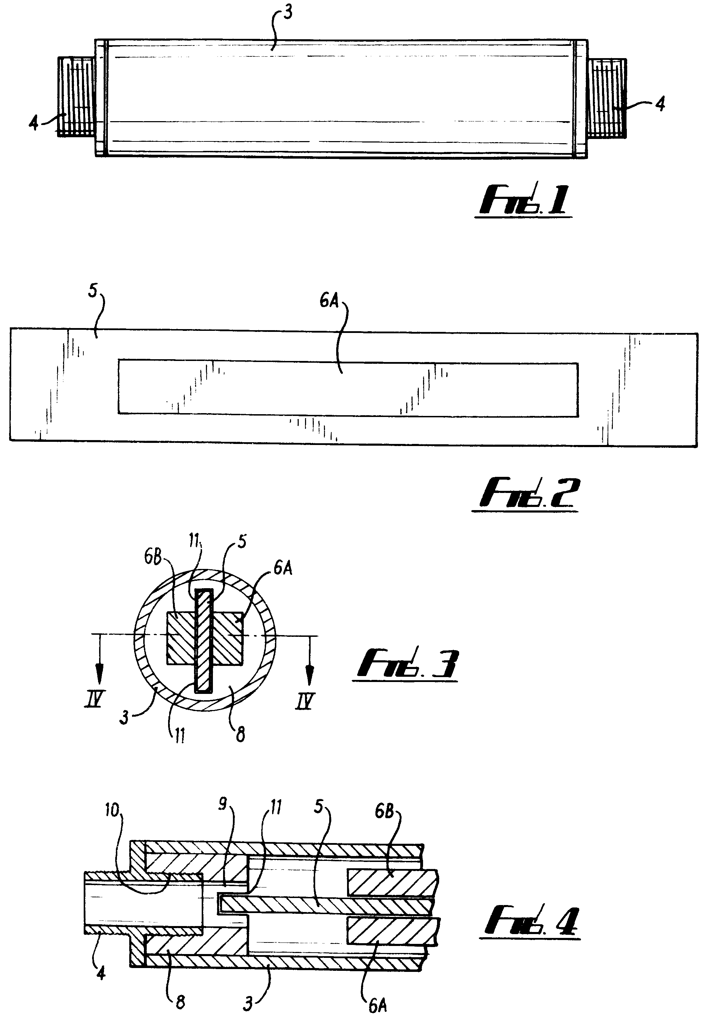

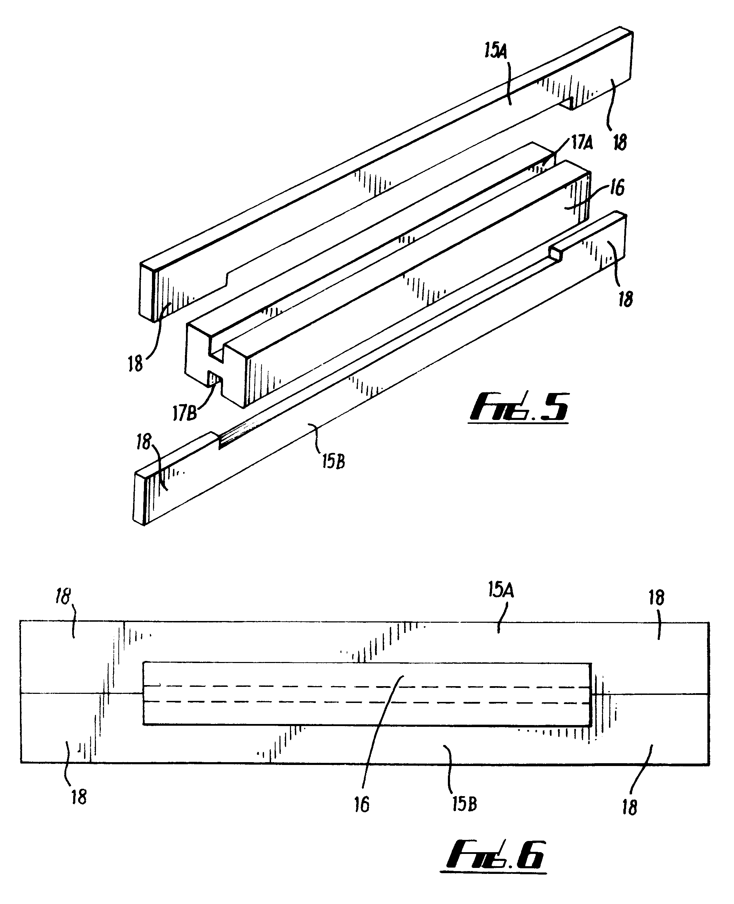

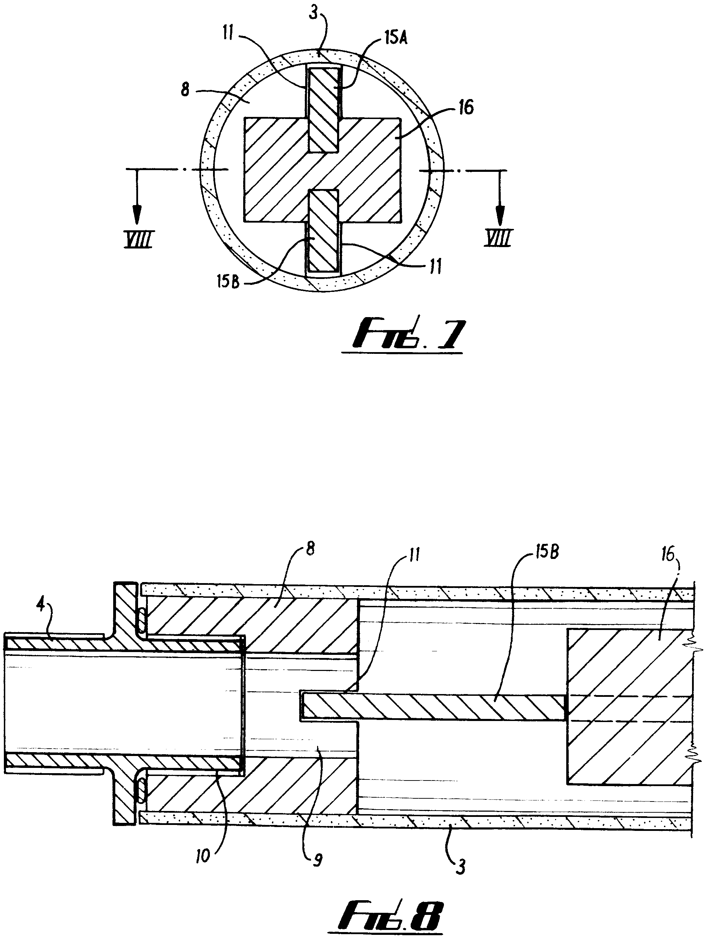

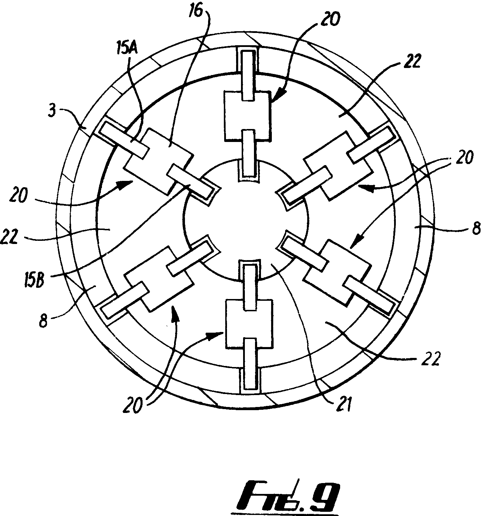

Referring to the drawings, the device comprises a non-metallic outer casing 3 fitted with threaded end connectors 4 by means of which it may be fitted in a section of water supply pipe so that the water to be treated flows through the device. In the embodiment of Figs. 2 to 4, a unitary metallic component is mounted within the casing and comprises a bar 5 of high purity iron or of copper to each side of which smaller bars 6A,6B of zinc are attached by means of bolts (not shown). The component is mounted in the casing 3 by means of end plugs one of which is shown at 8, each end plug comprising an annular body having a central bore 9 internally threaded at 10 and provided at its inner end with diametrically opposed slots 11 into which the associated end of the bar 5 locates. The end plugs 8 are secured in the casing 3 by welding or by means of a suitable adhesive, and retain the component consisting of the bars 5, 6A and 6B in position within the casing.

In use the device is fitted in a section of a water supply pipe (not shown) by means of the screw threaded end connectors 4 which engage with the threaded portions 10 of the respective end plugs 8 such that in use water enters the device through the central bore 9 of one end plug, passes around the component consisting of the bars 5, 6A and 6B and leaves the device through the bore 9 of the other end plug 8.

The device operates on the principle of cathodic protection. In the absence of the zinc bars 6A,6B the water would tend to attack the iron or copper bar 5 and reduce it to iron or copper oxide. Since the zinc is less noble than iron or copper, that is it occupies a lower position on the galvanic scale of metals, the water instead attacks the zinc and particles of zinc oxide and hydroxide are released into the water as it flows through the device. The zinc therefore acts as a sacrificial anode protecting the iron or copper from oxidation due to the latter being cathodic relative to the zinc. The zinc component and the iron or copper component must be maintained in intimate contact to prevent the passage of water between them.

Figs. 5 to 8 show an alternative embodiment of the invention incorporating a modified unitary metallic component comprising a central zinc component 16 having upper and lower longitudinal slots 17A,17B. The zinc component is held in place in the casing 3 by opposed bars 15A,15B, preferably of iron or copper which are of such thickness as to form a tight push fit in the slots 17A,17B. The bars 15A,15B have enlarged end portions 18 which extend beyond the bar 16 and engage in slotted end connectors similar to those of the Figs. 2 to 4 embodiment. In other respects the embodiment of Figs. 5 to 8 is constructed and operates in the same manner as the embodiment of Figs. 2 to 4.

Fig. 9 shows a further embodiment for use with larger installations in which a plurality of radially arranged unitary metallic components 20, each comprising iron or copper bars 15A,15B and a zinc bar 16 constructed in the same manner as the Figs. 5 to 8 embodiment, are supported in the casing 3 between slotted plastic end pieces 8 similar to those of the Figs. 2 to 4 and Figs. 5 to 8 embodiments, and a central locating piece 21 formed from plastics material and having a plurality of outwardly directed longitudinal slots equispaced around its circumference in which the inner edges of the bars 15B locate. In use water enters the device through a central bore in one end piece 8, passes along the passages 22 defined between the casing 3 and adjacent components 20 and leaves the device through a similar central bore in the other end piece 8. In other respects the device of Fig. 9 is constructed and operates in the same manner as the devices of Figs. 2 to 4 and Figs. 5 to 8. The components 20 could alternatively be constructed in the same manner as the component 5,6A,6B of the Figs. 2 to 4 embodiment.

It should be appreciated that although the devices operate on the cathodic protection principle, their function is not to protect the iron or copper as such, since it is the release of zinc particles into the water which produces the benefits in controlling scale formation. Zinc oxide and hydroxide particles released from the device remain in suspension in the water and act as sites for nucleation and crystallization of particles of scale forming materials, mainly calcium carbonate, which thus crystallize in suspension in the water rather than on the sides of vessels and the like into or through which the water subsequently flows. The iron or copper bar or bars therefore act merely as carriers, but require to be of a more noble material so that the water produces oxidation of the zinc and not of the iron or copper. Where the supporting bar or bars are of iron, iron of unalloyed high purity is preferred, in order to minimise rusting or oxidation of the iron itself towards the end of the life of the device when the zinc has been largely oxidised and the unit is near to requiring replacement.

The crystals of scale forming materials formed around the released zinc oxide and hydroxide particles are of such morphology as to resist subsequent attachment to pipes and vessels through which the water passes. Rather the crystals remain in suspension in the water and the device therefore serves to prevent or reduce scale deposition throughout the system downstream of the device. The effects of the invention persist for relatively long periods of time after treatment and scale deposition is therefore prevented or reduced even in cases where the treated water is subsequently stored in tanks or vessels prior to use.

In a typical example of a device according to the Figs. 5 to 8 embodiment for incorporation in a $\frac{1}{2}$ in. (1.27cm.) supply pipe with a maximum water flow rate of 7 gallons/min. (32 litres/min.) the casing comprises a 1 in. (2.54cm.) internal diameter plastic pipe around 9 in. (22.86cm.) in length, the iron or copper bars being 7 in. (17.78cm.) in length, 1 in. (2.54cm.) in combined height and 1/8 in. (0.3175cm.) thick, and the zinc bar being $4\frac{1}{2}$ in. (11.43cm.) long, $\frac{1}{2}$ in. (1.27cm.) high and 7/8in. (0.9525cm.) wide. The zinc bar is securely slotted into the iron or copper bars to maintain intimate surface contact between them and prevent passage of water between the adjacent surfaces.

The useful life of devices according to the invention is dependent on the ratio of the exposed surface area of zinc to iron or copper. This may be varied to produce greater or lesser release of zinc oxide and hydroxide particles into the water to suit individual applications and control the effective life of the device, but in general a ratio of 1:1 will produce the best balance between effectiveness and operative life. In the case of potable water the rate of release of salt particles into the water must be controlled to ensure compliance with World Health Organisation or other relevant Standards which currently require a zinc content in potable water of not more than 5000 μg/litre. In this respect the use of zinc is particularly advantageous in that consumption of small quantities of zinc is beneficial to human health.

Various modifications may be made without departing from the invention. For example, the cross-sectional shape of the casing may be varied and the metal elements may take different shapes or forms.

While zinc has been found to produce the most satisfactory results as the anodic material, other materials may be employed. In principle any metals spaced apart in the galvanic scale by a sufficient distance to generate an e.m.f. of 0.2V or more between them may be utilised, but the materials must not be such as to contaminate the water, especially where potable water is concerned. A further material which may be employed instead of iron or copper is mild steel.

A particular advantage of the invention lies in the fact that the scale forming impurities are not removed from the water but remain in suspension. These impurities, which mainly comprise calcium carbonate, are beneficial to human health. The invention therefore overcomes the problem of scale formation without at the same time removing beneficial constituents from the water.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

**Claims**

1. A method of treating hard water to counter the deposition of scale by releasing into the water ions and salts of a selected metal, characterised by introducing into the water a component comprising the selected metal (16) and a more noble metal (15A,15B) in contact with one another, whereby to induce the release from the selected metal of ions and salt particles operative to induce coagulation and crystallization of scale forming impurities in suspension in the water.

2. A method according to claim 1 characterised in that said selected metal is zinc.

3. A method according to claim 1 or 2 characterised in that said more noble metal is copper.

4. A method according to any of claims 1 to 3 characterised in that the ratio of surface area of selected metal to more noble metal exposed for contact with the water is 1:1.

5. A method according to any of claims 1 to 4 characterised in that both of said metals are non-toxic to humans.

6. A device for treating hard water to counter the deposition of scale characterised in that it comprises a unitary member comprising a component (16) of a selected metal and a component (15A,15B) of a more noble metal in contact with one another, whereby water flowing through the device produces oxidation of the selected metal and releases ions and salt particles into the water to form sites for the formation of crystals of scale forming impurities in suspension in the water.

7. A device according to claim 6 characterised in that said selected metal is zinc.

8. A device according to claim 6 or 7 characterised in that said more noble metal is copper or iron.

9. A device according to any of claims 6 to 8 characterised by a casing (3) of non-metallic material surrounding and spaced from said components (15A,15B,16).

10. A device according to claim 9 characterised in that said casing (3) is of circular cross-section, said component of more noble metal comprises at least one bar (15A,15B) supported in said casing (3), and said component (16) of selected metal is secured to and supported by said bar (15A,15B).

11. A device according to claim 10 characterised in that the or each said bar (15A,15B) is supported in slotted end members (8) fitted to said casing (3) and provided with central passages (9) through which water may enter and leave the device.

12. A device according to any of claims 9 to 11 characterised by a plurality of said unitary members (20) supported in said casing (3).

13. A device according to claim 12 characterised in that said members (20) are radially disposed around and at least partly supported by a non-metallic central support member (21).

14. A device according to any of claims 6 to 13 characterised in that the ratio of surface area of selected metal to more noble metal exposed for contact with water passing through the device is 1:1.

15. A device according to any of claims 6 to 14 characterised in that said components (15A,15B,16) are secured together in intimate contact.

_Fig.1_

_Fig.2_

_Fig.3_

_Fig.4_

*Fig.5*

*Fig.6*

_Fig. 7_

_Fig. 8_

FIG. 9

**European Patent Office**

# EUROPEAN SEARCH REPORT

Application Number

EP 92 30 2639

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-2 805 988 (C.M. RADER)<br>* column 1, line 34 - line 43 *<br>* column 2, line 14 - line 24 *<br>--- | 1-3,6-8 | C02F1/46 |
| A | GB-A-1 199 968 (M.H. MACK)<br>* claims 1,3 *<br><br>----- | 1,3,6,8 | |
| | | | **TECHNICAL FIELDS SEARCHED (Int. Cl.5)**<br><br>C02F |

The present search report has been drawn up for all claims

| Place of search | Date of completion of the search | Examiner |
|---|---|---|
| THE HAGUE | 22 JUNE 1992 | KASPERS H.M.C. |

EPO FORM 1503 03.82 (P0401)